# EUROPÄISCHE PATENTSCHRIFT

(11) **EP 3 287 055 B1**
(45) Veröffentlichungstag und Bekanntmachung des Hinweises auf die Patenterteilung: **06.10.2021**
(21) Anmeldenummer: 17185735.2
(22) Anmeldetag: 10.08.2017
(51) Int. Cl.: A47J 43/07

(54) **SICHERUNG EINER KÜCHENGERÄTEKOMPONENTE**
SECURING OF A KITCHEN APPLIANCE COMPONENT
SÉCURITÉ D'UN COMPOSANT D'USTENSILE DE CUISINE

(30) Priorität: 26.08.2016 DE 102016216096
(43) Veröffentlichungstag der Anmeldung: 28.02.2018
(73) Patentinhaber: BSH Hausgeräte GmbH, 81739 München (DE)
(72) Erfinder: Kovacec, Bostjan, 1420 Trbovlje (SI); Decman, Igor, 3232 Ponikva (SI); Robida, Tomaz, 3341 Smartno ob Dreti (SI); Semeja, Uros, 3327 Smartno ob Paki (SI)

(56) Entgegenhaltungen:
- WO-A1-2014/147346
- DE-A1-102013 205 545
- DE-T2-602004 007 166
- FR-A1- 2 559 337
- FR-A1- 2 765 467

## Beschreibung

Die vorliegende Erfindung betrifft eine Küchengerätekomponente mit einer Sicherungseinrichtung für ein elektromotorisches (also einen Elektromotor aufweisendes) Küchengerät. Die Erfindung betrifft ferner ein Küchengerät mit einer derartigen Küchengerätekomponente und einem Elektromotor.

Eine Vielzahl von Küchengerätekomponenten, die zum Bearbeiten von Lebensmitteln an ein geeignetes Küchengerät (beispielsweise eine Küchenmaschine oder einen Standmixer o.Ä.) angeschlossen werden können, umfasst jeweils ein Gefäß, in dem ein Lebensmittel mit Hilfe eines Bearbeitungselements bearbeitet, beispielsweise zerhackt, gemahlen und/oder gerührt werden kann.

Dabei sind in der Regel Sicherungen vorgesehen, die insbesondere verhindern sollen, dass ein derartiges Bearbeitungselement im Betrieb berührt wird und dadurch Verletzungen verursacht oder auch dass das Gefäß ohne einen vorgesehenen Deckel betrieben und dadurch Teile des Lebensmittels aus dem Gefäß herausgeschleudert werden.

Herkömmlicherweise umfassen derartige Sicherungen häufig elektrische Komponenten. Dies hat den Nachteil, dass Defekte an den Sicherungen nicht leicht erkannt und/oder korrekt zugeordnet werden können. Zudem können die Sicherungen bei gestörter Stromzufuhr ausfallen und so ein Betrieb der Küchengerätekomponenten auch bei nicht vorschriftsmäßig geschlossenem Deckel möglich sein.

Bekannte rein mechanische Sicherungen hingegen können vom Verwender oft leicht umgangen werden, insbesondere beruhen sie meist auf der aktiven Bereitschaft des Verwenders, die Sicherung einzustellen. Aufgrund von Unachtsamkeit oder Leichtsinn erfolgt die Anwendung derartiger Sicherungen häufig nicht. Auch sind viele mechanische Sicherungen anfällig für eine Funktionsunfähigkeit bei Verschmutzungen, wie sie in der Küche beispielsweise durch verarbeitete Lebensmittel oft auftreten, und sie schließen dann einen Zugriff auf das Bearbeitungselement, während dieses betrieben wird, nicht zuverlässig aus. Beispiele für derartige Sicherungen finden sich in WO 2014/147346 A1, DE 10 2013 205545 A1, FR 2 765 467 A1.

Die vorliegende Erfindung hat die Aufgabe, eine Technik bereitzustellen, die eine Sicherung für eine Küchengerätekomponente unter Vermeidung der genannten Nachteile ermöglicht.

Eine erfindungsgemäße Küchengerätekomponente für ein elektromotorisches Küchengerät (wie beispielsweise eine Küchenmaschine, einen Entsafter, einen Standmixer oder ein multifunktionales Zerkleinerungsgerät) umfasst ein Gefäß, einen Deckel, eine Sicherungseinrichtung und einen Komponentenfuß zum lösbaren Anschließen der Küchengerätekomponente an das Küchengerät; das Gefäß kann (in seinem Inneren) ein Bearbeitungswerkzeug, beispielsweise ein Rotationswerkzeug aufweisen, das insbesondere mindestens ein rotierbares Messer und/oder eine rotierende Reibe umfassen kann.

Die Sicherungseinrichtung umfasst ein verstellbares Deckelsicherungselement und ein verstellbares Anschlusssicherungselement: Das Deckelsicherungselement ist dabei dazu eingerichtet, in einer Zugriffssperrstellung den Deckel in einer vorgesehenen Schließposition zu halten, in einer Zugriffsfreigabestellung den Deckel dagegen freizugeben. Das Anschlusssicherungselement ist dazu eingerichtet, in einer Anschlusssperrstellung einen Anschlussbereich am Komponentenfuß zu versperren, in einer Anschlussfreigabestellung den Anschlussbereich dagegen freizugeben.

Dabei stehen das Deckelsicherungselement und das Anschlusssicherungselement in einer (vorzugsweise rein mechanischen) Wirkverbindung miteinander, die eine Gleichzeitigkeit von Zugriffsfreigabestellung des Deckelsicherungselements und Anschlussfreigabestellung des Anschlusssicherungselements ausschließt (also unmöglich macht).

In der Zugriffssperrstellung ist der Deckel somit in der Schließposition auf dem Gefäß fixiert, so dass ein Zugriff auf das Innere des Gefäßes gesperrt, also unmöglich ist. In der Zugriffsfreigabestellung dagegen ist der Deckel vom Gefäß losgelöst, kann abgenommen werden oder bereits abgenommen sein.

Die Anschlusssperrstellung ist analog unverträglich mit einem Anschluss der Küchengerätekomponente an das Küchengerät. Die Küchengerätekomponente kann bei einer derartigen Stellung des Anschlusssicherungselements also nicht an das Küchengerät angeschlossen werden, und sie kann in dieser Stellung auch nicht bereits angeschlossen sein, weil in dieser Anschlusssperrstellung der Anschlussbereich vom Anschlusssicherungselement versperrt (beispielsweise blockiert) ist. In der Anschlussfreigabestellung hingegen kann die Küchengerätekomponente an das Küchengerät angeschlossen werden oder bereits angeschlossen sein und damit vorzugsweise betrieben werden.

Als Anschlussbereich ist ein Bereich an der Oberfläche des Komponentenfußes zu verstehen, in dem der Komponentenfuß bei einem Anschließen und/oder einem angeschlossenen Zustand mit einem entsprechenden Adaptersockel (für die Küchengerätekomponente) an dem Küchengerät in eine Wechselbeziehung treten muss bzw. tritt und/oder getreten ist. Eine derartige Wechselbeziehung kann beispielsweise einen Kontakt und/oder ein Ineinandereingreifen jeweiliger Elemente umfassen und/oder eine Bewegung eines Elements des Adaptersockels relativ zum Anschlussbereich in unmittelbarer Nähe zu diesem (vorzugsweise in Kontakt oder einem Abstand von höchstens 5mm, bevorzugter höchstens 2mm); insbesondere kann die Wechselbeziehung ein Entlangleiten des Anschlussbereichs an einer Erhebung des Adaptersockels umfassen. In der Anschlusssperrstellung des Anschlusssicherungselements ist der Anschlussbereich versperrt, die genannte Wechselbeziehung daher unmöglich, beispielsweise weil mindestens ein Abschnitt des Anschlusssicherungselements einen Raum einnimmt, der im Anschluss oder beim Anschließen für einen Bereich des Adaptersockels vorgesehen und so also im Wege ist.

Die vorliegende Erfindung verhindert somit in vorteilhafter Weise, dass die Küchengerätekomponente in offenem Zustand (wenn also der Deckel nicht in der vorgesehenen Schließstellung fixiert ist) an das Küchengerät angeschlossen werden kann, und umgekehrt auch, dass sie in angeschlossenem Zustand geöffnet werden kann: Beides würde eine Gleichzeitigkeit von Zugriffsfreigabestellung des Deckelsicherungselements und Anschlussfreigabestellung des Anschlusssicherungselements bedeuten, die ausgeschlossen ist. Damit können die oben geschilderten Verletzungen eines Verwenders und Verschmutzungen der Umgebung effektiv verhindert werden.

Das Gefäß kann insbesondere mindestens teilweise aus Kunststoff, Glas, Keramik und/oder Metall bestehen. Vorzugsweise ist der Komponentenfuß dauerhaft in einen Gefäßboden integriert oder mit diesem verbunden; alternativ kann der Komponentenfuß lösbar am Gefäß zu befestigen sein, beispielsweise mittels eines Gewindes.

Gemäß einer vorteilhaften Ausführungsform weist der Komponentenfuß eine Oberflächenausbildung auf, die dazu eingerichtet ist, beim Anschließen und/oder im angeschlossenen Zustand der Küchengerätekomponente (an das Küchengerät) mit einem küchengeräteseitigen Adaptersockel zusammenzuwirken. Die Oberflächenausbildung kann beispielsweise mindestens ein Element (wie insbesondere ein Gewinde, mindestens eine Vertiefung und/oder mindestens eine Erhebung) umfassen, das dazu eingerichtet ist, mit einem jeweiligen (Gegen)Element (z.B. einem Gegengewinde, einer Erhebung und/oder einer Vertiefung am Adaptersockel) form- und/oder kraftschlüssig verbunden zu werden bzw. zu sein. Die Oberflächenausbildung umfasst vorzugsweise den Anschlussbereich.

Erfindungsgemäß umfasst der Komponentenfuß mindestens ein Bajonettanschlusselement umfasst, das dazu eingerichtet ist, gegen ein (Gegen)Element eines passenden küchengeräteseitigen Adaptersockels verdreht zu werden und mit diesem zu verhaken. Der Anschlussbereich umfasst in diesem Fall vorzugsweise eine vorgesehene Position und/oder einen vorgesehenen Eintrittsbereich in die vorgesehene Position für das Element des Adapterfußes. Wenn dieser Anschlussbereich somit in der Anschlusssperrstellung vom Anschlusssicherungselement versperrt wird, kann die Küchengerätekomponente nicht an das Küchengerät angeschlossen werden.

Erfindungsgemäß ist das Deckelsicherungselement im Wesentlichen stabartig ausgebildet. Die Längsachse eines derartigen Deckelsicherungselements verläuft vorzugsweise im Wesentlichen vertikal an einer Wand des Gefäßes entlang; so kann das Deckelsicherungselement kompakt und abbruchsicher an dem Gefäß anliegen. Die Bezeichnung "vertikal" bezieht sich dabei - ebenso wie die Angaben "horizontal", "oben" und "unten" sowie davon abgeleitete Begriffe - in dieser Schrift stets auf eine Ausrichtung des Gefäßes der Küchengerätekomponente in bestimmungsgemäßer Verwendung (in der insbesondere der Komponentenfuß unten und der Deckel oben angeordnet ist).

Zwischen Zugriffssperrstellung und Zugriffsfreigabestellung ist ein derartiges stabartiges Deckelsicherungselement vorzugsweise in seiner Längsrichtung relativ zum Gefäß bewegbar. Erfindungsgemäß ist es in der Zugriffssperrstellung vertikal weiter oben angeordnet als in der Zugriffsfreigabestellung, und zwar vorteilhafterweise 3mm bis 10mm, bevorzugter 4 mm bis 8mm weiter oben.

Das Anschlusssicherungselement ist (analog) stabartig geformt. Seine Längsachse kann dann insbesondere im Wesentlichen horizontal im Bereich des Komponentenfußes verlaufen, beispielsweise so, dass es in seiner Längsrichtung vom Komponentenfuß absteht (bei einem im Wesentlichen runden (z.B. zylindrischen) Komponentenfuß beispielsweise radial). Besonders vorteilhaft ist eine Ausführungsform, bei der die Länge eines derartigen Anschlusssicherungselements im Wesentlichen einem Ausmaß entspricht, in dem sich das Gefäß der Küchengerätekomponente vom Komponentenfuß zum Deckel (z.B. konisch) erweitert: Das Anschlusssicherungselement steht somit nur so weit von dem Komponentenfuß ab, dass sein äußeres (vom Gefäß abgewandtes) Ende immer noch im Wesentlichen vertikal unter einem oberen Rand des Gefäßes angeordnet ist. Dies ermöglicht eine besonders kompakte und damit stabile Bauweise der Küchengerätekomponente. Zwischen Anschlusssperrstellung und Anschlussfreigabestellung ist ein derartiges stabartiges Anschlusssicherungselement vorzugsweise in seiner Längsrichtung relativ zum Gefäß bewegbar. In der Anschlussfreigabestellung steht es dabei vorzugsweise (z.B. radial) weiter vom Komponentenfuß ab als in der Anschlusssperrstellung.

Sind sowohl Deckelsicherungselement als auch Anschlusssicherungselement stabartig ausgebildet, sind sie vorzugsweise in jeder ihrer beiden Stellungen im Wesentlichen orthogonal zu einander angeordnet. Dies ermöglicht eine besonders kompakte Form der Küchengerätekomponente.

Die Wirkverbindung von Deckelsicherungselement und Anschlusssicherungselement einer erfindungsgemäßen Küchengerätekomponente kann z.B. durch eine Kopplung von Anschlusssicherungselement und Deckelsicherungselement realisiert werden, die dazu eingerichtet ist, eine Bewegung des Anschlusssicherungselements in eine Bewegung des Deckelsicherungselements zu übertragen und umgekehrt. Vorzugsweise wird dabei die Bewegungsrichtung jeweils geändert; die Kopplung kann beispielsweise mindestens ein Rädchen mit hinübergeleitetem Verbindungselement für Deckelsicherungs- und Anschlusssicherungselement, ineinandergreifende Zahnrädchen und/oder mindestens ein Führungselement. Insbesondere kann sie beispielsweise einen Zapfen an einem der beiden Elemente (Deckelsicherungselement bzw. Anschlusssicherungselement) umfassen, der in eine Führungsbahn am jeweils anderen Element eingreift. Bevorzugtermaßen ist die Kopplung für einen Verwender unlösbar (beispielsweise weil sie von einem Gehäuse umgeben ist und damit unzugänglich für den Verwender ist und/oder weil sie dauerhaft ineinander eingreifende Elemente umfasst). Die Wirkverbindung und damit die Sicherungseinrichtung kann damit nicht von einem Verwender außer Kraft gesetzt werden.

Speziell kann z.B. die Wirkverbindung mindestens eine Führungsschiene, - rinne, -nut und/oder mindestens einen Führungsspalt am Anschlusssicherungselement sowie mindestens eine zapfenartige Erhebung am Deckelsicherungselement umfassen, die in die Führungsschiene, - rinne bzw. -nut bzw. in den Führungsspalt eingreift.

Alternativ oder zusätzlich kann die Wirkverbindung umgekehrt mindestens eine Führungsschiene, - rinne, -nut und/oder mindestens einen Führungsspalt am Deckelsicherungselement und mindestens eine zapfenartige Erhebung am Anschlusssicherungselement umfassen, die in die Führungsschiene, - rinne, -nut bzw. in den Führungsspalt eingreift.

Die zapfenartige Erhebung kann somit jeweils nur entlang der jeweiligen Führungsbahn bewegt werden (z.B. gleiten) und bestimmt so eine Bewegung des jeweiligen Elements, an dem sie angeordnet ist.

Gemäß einem speziellen bevorzugten Ausführungsbeispiel sind Deckelsicherungselement und Anschlusssicherungselement stabartig sowie (z.B. im Wesentlichen orthogonal) voneinander abgewinkelt angeordnet. Dabei verläuft mindestens eine Führungsschiene, - rinne , -nut und/oder mindestens ein Führungsspalt an einem der genannten Sicherungselemente in einer solchen Wirkverbindung vorzugsweise mindestens in einem Abschnitt im Wesentlichen entlang einer Winkelhalbierenden zwischen Deckelsicherungselement und Anschlusssicherungselement. Auf diese Weise kann eine besonders gute Übertragung der Bewegungen der jeweiligen Elemente, also eine vorteilhafte Wirkverbindung realisiert werden.

Besonders vorteilhaft ist eine Ausführungsvariante, bei der das Deckelsicherungselement und/oder das Anschlusssicherungselement in ein Führungsgehäuse eingefasst sind/ist, das vorzugsweise an das Gefäß angeformt, also fest mit diesem verbunden ist; ein derartiges Führungsgehäuse kann dazu eingerichtet sein, eine Bewegbarkeit des jeweiligen Elements im Wesentlichen auf eine einzige Dimension (vorzugsweise vor und zurück) einzuschränken und so eine geeignete Überführung der Elemente von einer Stellung in die jeweils andere gewährleisten. Insbesondere kann mindestens ein Teil eines derartigen Führungsgehäuses monolithisch in mindestens ein Teil des Gefäßes integriert und beispielsweise aus einem Kunststoff, Glas und/oder Metall hergestellt sein. Im Fall, dass das Anschlusssicherungselement von einem derartigen Führungsgehäuse eingefasst ist, ragt in seiner Anschlusssperrstellung vorzugsweise ein Abschnitt des Anschlusssicherungselements aus dem Führungsgehäuse hervor; der hervorstehende Abschnitt versperrt dann vorzugsweise den Anschlussbereich.

Bevorzugt ist eine Ausführungsform, bei der das Sicherungselement zwischen einem deckelseitigen Ende des Deckelsicherungselements und einem dem Komponentenfuß zugewandten Ende des Anschlusssicherungselement (und ggf. mit Ausnahme dieser Enden) im Wesentlichen vollständig von einem Führungsgehäuse wie erwähnt umgeben sind. Auf diese Weise ist insbesondere der Verbindungsgebereich, in dem die beiden Elemente in Wirkverbindung miteinander verbunden sind, von dem Gehäuse umgeben und damit vor äußeren Einflüssen geschützt, so dass die Küchengerätekomponente dieser Ausführungsvariante besonders robust ist und Manipulationen durch einen (z.B. leichtsinnigen) Verwender nicht möglich sind. Besonders vorteilhaft ist eine Variante, in der das Führungsgehäuse mindestens teilweise durchsichtig ist. Im Falle eines Defekts des Sicherungselements kann dieser also leicht erkannt werden.

Gemäß einer vorteilhaften Ausführungsform einer erfindungsgemäßen Küchengerätekomponente ist das Anschlusssicherungselement dazu eingerichtet, in einem an das Küchengerät angeschlossenen Zustand (in dem sich das Anschlusssicherungselement somit in Anschlussfreigabestellung befindet) an eine Oberfläche des Küchengeräts (beispielsweise an eine Oberfläche eines Adaptersockels des Küchengeräts, auf den der Komponentenfuß aufgesetzt ist) anzustoßen. Die Oberfläche blockiert damit vorzugsweise einen Übergang des Anschlusssicherungselements von der Anschlussfreigabestellung in die Anschlusssperrstellung und damit - infolge der Wirkverbindung - einen Übergang des Deckelsicherungselements von der Zugriffssperrstellung in die Zugriffsfreigabestellung. Im angeschlossenen Zustand der Küchengerätekomponente, in dem diese an den Adaptersockel und damit vorzugsweise an ein Getriebe des Küchengeräts angeschlossen ist, bleibt der Deckel damit in der Schließstellung fixiert.

Vorteilhaft ist eine Ausführungsform einer erfindungsgemäßen Küchengerätekomponente, bei welcher der Deckel (vorzugsweise an seinem Rand) ein deckelseitiges Führungselement und das Deckelsicherungselement ein passendes gefäßseitiges Führungselement aufweisen. Wird der Deckel auf dem Gefäß in seine vorgesehene Schließstellung eingedreht, wirken die beiden Führungselemente vorzugsweise so zusammen, dass das Deckelsicherungselement in seine Zugriffssperrstellung überführt wird. Diese Ausführungsform ermöglicht ein eine einfache und zuverlässige Einstellung der Zugriffssperrstellung, nämlich im Wege der Drehung des Deckels und ohne dass das Deckelsicherungselement selbst angefasst werden muss.

Speziell kann das gefäßseitige Führungselement beispielsweise eine Rinne, Nut, Schiene oder einen Spalt umfassen und das deckelseitige Führungselement einen Vorsprung, der beim beschriebenen Zusammenwirken in die Rinne, Nut, Schiene bzw. den Spalt am Deckel eingreift, oder umgekehrt. Der Vorsprung kann dann (in beiden Fällen) vom Führungselement in einer vorgesehenen Bahn geführt und das Deckelsicherungselement damit in seine Zugriffssperrstellung überführt werden: In dieser wird der Deckel in einer vorgesehenen Schließposition gehalten, so dass der Zugriff auf das Gefäßinnere nicht möglich ist.

Erfindungsgemäß ist das deckelseitige Führungselement als Vorsprung und das gefäßseitige Führungselement als Rinne, Nut, Schiene oder Spalt ausgebildet. Das gefäßseitige Führungselement weist einen Eingang für den Vorsprung und einen vorgesehenen Haltebereich auf, an dem der Vorsprung gehalten wird, wenn der Deckel in der vorgesehenen Schließstellung ist. Der Haltebereich ist dabei vorzugsweise vertikal weiter unten angeordnet als der Eingang des gefäßseitige Führungselements: Bei dieser Ausführungsform kann insbesondere der Vorsprung beim fortschreitenden Eindrehen des Deckels das Deckelsicherungselement angehoben werden, nämlich aus der vorteilhafterweise vertikal weiter unten liegenden Zugriffsfreigabestellung in die vertikal weiter oben liegende Zugriffssperrstellung.

Bevorzugt ist eine Ausführungsform, bei der die Sicherungseinrichtung einen Federmechanismus (beispielsweise eine Zugfeder umfasst), dessen Federkraft der Zugriffssperrstellung des Deckelsicherungselements entgegenwirkt. Eine Einstellung der Zugriffssperrstellung des Deckelsicherungselements und damit vorzugsweise auch eine Einstellung der Anschlussfreigabestellung des Anschlusssicherungselements umfasst bei einer derartigen Ausführungsform somit vorzugsweise ein Spannen des Federmechanismus'. Vorzugsweise ist das Zugriffsicherungselement dazu eingerichtet, in einem derartigen Zustand zu verrasten; dies kann bei einer Ausführungsform mit deckel- bzw. gefäßseitigen Führungselementen wie oben geschildert beispielsweise durch mindestens eine Unebenheit in der Form mindestens eines der Führungselemente, insbesondere einer Rinne, Nut, Schiene oder eines Spalts erreicht werden.

Ein erfindungsgemäßes Küchengerät weist einen Elektromotor, eine erfindungsgemäße Küchengerätekomponente gemäß einer der in dieser Schrift offenbarten Ausführungsformen und einen Adaptersockel für die Küchengerätekomponente auf (an den angeschlossen zu werden der Komponentenfuß also eingerichtet ist).

Vorzugsweise weist der Adaptersockel eine Oberflächenausprägung auf, die dazu eingerichtet ist, beim Anschließen und/oder wenn die Küchengerätekomponente an den Adaptersockel angeschlossen ist, mit einer Oberflächenausbildung am Komponentenfuß zusammenzuwirken. Beispielsweise kann die Oberflächenausbildung am Komponentenfuß mindestens ein Element (wie insbesondere ein Gewinde, mindestens eine Vertiefung und/oder mindestens eine Erhebung, erfindungsgemäß mindestens ein Bajonettanschlusselement) umfassen und analog die Oberflächenausprägung am Adaptersockel mindestens ein jeweiliges (Gegen)Element (z.B. ein Gegengewinde, eine Erhebung und/oder eine Vertiefung, insbesondere mindestens ein Element eines Bajonettanschlusses), das dazu eingerichtet ist, form- und/oder kraftschlüssig mit dem Element am Komponentenfuß verbunden zu werden bzw. zu sein und/oder an einer vorgesehenen Position angeordnet zu werden bzw. zu sein. Die Oberflächenausbildung am Komponentenfuß umfasst dabei vorzugsweise den Anschlussbereich. Bei einer Versperrung des Anschlussbereichs am Komponentenfuß durch das Anschlusssicherungselement in Anschlusssperrstellung ist vorzugsweise das genannte Verbinden unmöglich bzw. die Position und/oder ein Zugang zur Position versperrt, so dass der Anschluss der Küchengerätekomponente an den Adaptersockel unmöglich ist.

Bei einem Küchengerät gemäß einer vorteilhaften Ausführungsform ist das Anschlusssicherungselement dazu eingerichtet ist, im angeschlossenen Zustand des Komponentenfußes an einer Oberfläche des Adaptersockels anzustoßen, diese also zu berühren. Wie oben beschrieben blockiert die Oberfläche damit vorzugsweise einen Übergang des Anschlusssicherungselements von der Anschlussfreigabestellung in die Anschlusssperrstellung und damit - infolge der Wirkverbindung - einen Übergang des Deckelsicherungselements von der Zugriffssperrstellung in die Zugriffsfreigabestellung. Im angeschlossenen Zustand der Küchengerätekomponente bleibt der Deckel damit in der Schließstellung fixiert.

Ein erfindungsgemäßes Küchengerät kann insbesondere eine Küchenmaschine, ein Entsafter, ein Standmixer oder ein multifunktionales Zerkleinerungsgerät sein. Neben dem Adaptersockel kann das Küchengerät weitere Adapter für die Küchengerätekomponente und/oder für andere Komponenten aufweisen.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt.

Es zeigen schematisch:
- Figur 1:: ein Küchengerät mit Küchengerätekomponente gemäß einer exemplarischen Ausführungsform der vorliegenden Erfindung;
- Figur 2:: eine Detailansicht der Sicherungseinrichtung gemäß Figur 1 in zwei Sicherungssituationen; und
- Figur 3:: ein alternatives Ausführungsbeispiel für eine erfindungsgemäße Küchengerätekomponente in zwei Sicherungssituationen.

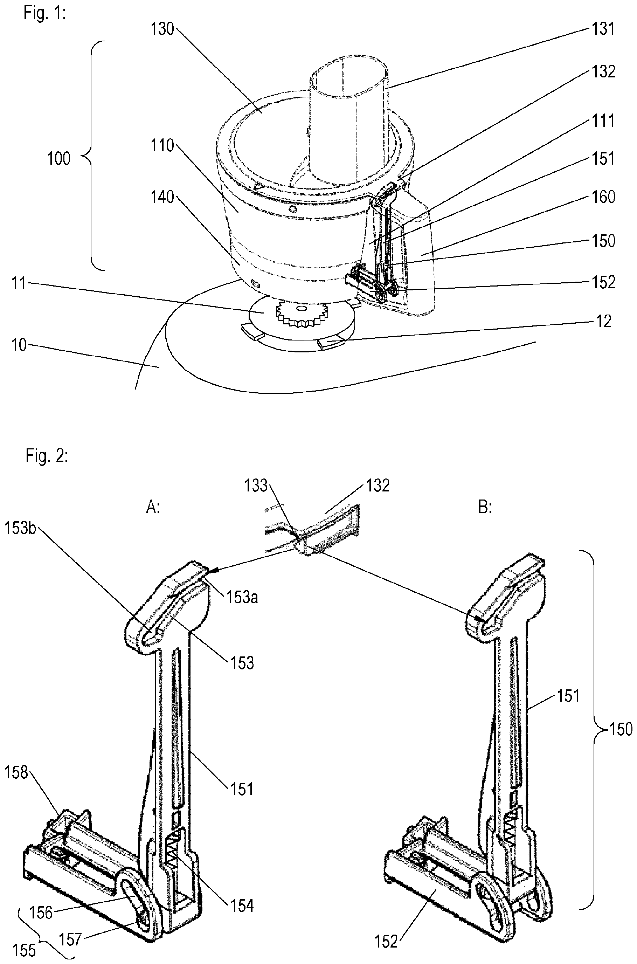

In Figur 1 ist vereinfacht eine Küchengerätekomponente 100 gemäß einem Ausführungsbeispiel der vorliegenden Erfindung dargestellt, das an einen Adaptersockel 11 eines (nur teilweise gezeigten) Küchengeräts 10 anzuschließen ist, um mit einem (nicht gezeigten) Getriebe des Küchengeräts verbunden zu werden.

Die Küchengerätekomponente 100 umfasst ein Gefäß 110, einen Deckel 130, einen Komponentenfuß 140 und eine Sicherungseinrichtung 150; zur besseren Erkennbarkeit der Sicherungseinrichtung 150 sind die sonstigen Elemente der Küchengerätekomponente gestrichelt und die Sicherungseinrichtung 150 durch sie hindurchscheinend dargestellt.

Die erfindungsgemäße Sicherungseinrichtung 150, die genauer weiter unten mit Bezug zur Figur 2 beschrieben ist, umfasst ein stabartig ausgebildetes, vertikal angeordnetes Deckelsicherungselement 151 und ein stabartig ausgebildetes, horizontal angeordnetes Anschlusssicherungselement 152. Diese beiden Elemente sind in ein gemeinsames Führungsgehäuse 111 am Gefäß eingefasst, das ihre Bewegbarkeit jeweils auf eine Dimension beschränkt, nämlich auf eine vertikale Bewegung im Falle des Deckelsicherungselements 151 und auf eine horizontale Bewegung im Falle des Anschlusssicherungselements 152. Das Führungsgehäuse 111 ist im gezeigten Ausführungsbeispiel an einen Griff 160 des Gefäßes 110 angeformt.

Der Deckel 130 umfasst in der dargestellten Ausführungsform einen Zuführschacht 131 zum Einfüllen von zu bearbeitendem Lebensmittel in das Gefäß 110 bei geschlossenem

Deckel 130. Der Deckel weist weiterhin an seinem Rand einen Deckelausläufer 132 auf, der vorzugsweise ein deckelseitiges Führungselement umfasst, wie es in der Figur 2 dargestellt und mit Bezug zu ihr weiter unten beschrieben ist.

Komponentenfuß 140 und Adaptersockel 11 bilden im erfindungsgemäßen Beispiel einen Bajonettanschluss aus: (Nicht sichtbare) Bajonettanschlusselement einer Oberflächenausbildung an der Unterseite des Komponentenfußes 140 sind dabei dazu eingerichtet, in Elemente 12 einer Oberflächenausprägung des Adaptersockels 11 eingedreht zu werden und mit diesen so zu verhaken. Im Bereich einer vorgesehenen Position eines der Elemente 12 des Adaptersockels und/oder in einem vorgesehenen Eintrittsbereich in die vorgesehene Position (durch den ein Element 12 beim Anschließen also beispielsweise hindurchzudrehen ist) ist am Komponentenfuß 140 vorzugsweise ein Anschlussbereich im Sinne der vorliegenden Schrift angeordnet, der in einer Anschlusssperrstellung des Anschlusssicherungselements 152 versperrt ist, so dass das Anschließen der Küchengerätekomponente 100 am Adaptersockel 11 unmöglich ist.

In Figur 2 ist (in einer Explosionsdarstellung) eine Detailansicht der in der Figur 1 dargestellten Sicherungseinrichtung 150 in zwei Situationen A und B sowie ein Abschnitt des Deckelausläufers 132 gezeigt. Dieser umfasst einen Vorsprung, der ein deckelseitiges Führungselement 133 bildet, das dazu eingerichtet ist, mit dem Deckel in das gefäßseitige Führungselement 153 einzugreifen, das an einem freien Ende des Deckelsicherungselements 151 und als eine Rinne ausgebildet ist. Die Rinne umfasst einen Eingang 153a, durch den der Vorsprung (also das gefäßseitige Führungselement) 153 in die Rinne eingedreht werden kann, und einen Haltebereich 153b, in dem das deckelseitige Führungselement 133 (aufgrund einer Unebenheit in der Rinne) vorzugsweise lösbar verrastet, wenn der Deckel in einer vorgesehenen Schließstellung ist. Der Eingang 153a ist dabei vertikal weiter oben angeordnet als der Haltebereich 153b. Das Eindrehen des Deckels bzw. des Vorsprungs (und damit ein Übergang von der gezeigten Situation A in Situation B) vom Eingang 153a in den Haltebereich 153b bewirkt also ein Anheben des Deckelsicherungselements 151 von dessen Zugriffsfreigabestellung in dessen Zugriffssperrstellung. Insbesondere kann die Sicherungseinrichtung somit bequem bedient werden, ohne direkt angefasst werden zu müssen.

Infolge einer Kopplung 155, in der Deckelsicherungselement 151 und Anschlusssicherungselement 152 in Wirkverbindung miteinander verbunden sind (und weil die Elemente - wie mit Bezug zur Figur 1 beschrieben, in der Figur 2 aber nicht sichtbar ist - in ein Führungsgehäuse 111 eingefasst sind), wird durch den genannten Übergang das Anschlusssicherungselement 152 in horizontaler Richtung bewegt, und zwar in der Darstellung von links nach rechts. Dadurch kann das Anschlusssicherungselement an seinem freien Ende 158 aus einem (nicht gezeigten) Anschlussbereich am Komponentenfuß herausgezogen, also von der Anschlusssperrstellung in die Anschlussfreigabestellung überführt werden. Insbesondere ist somit eine Gleichzeitigkeit von Zugriffsfreigabestellung des Deckelsicherungselements 151 (siehe Situation A) und Anschlussfreigabestellung (Situation B) des Anschlusssicherungselements 152 ausgeschlossen.

Die Sicherungseinrichtung 150 umfasst weiterhin einen Federmechanismus 154, der vorliegend eine Zugfeder umfasst. Deren Federkraft wirkt der Zugriffssperrstellung des Deckelsicherungselements entgegen, die Feder wird/ist also gespannt, wenn das Deckelsicherungselement in die Zugriffssperrstellung überführt wird (von Situation A in Situation B) bzw. bereits in dieser Stellung ist (Situation B).

Die Kopplung 155, mit der die genannte Wirkverbindung realisiert wird, umfasst im dargestellten Beispiel einen Führungsspalt 156 im Anschlusssicherungselement, in den eine zapfenartige Erhebung 157 des Deckelsicherungselements eingreift. Der Führungsspalt ist dabei leicht gekrümmt und umfasst einen Abschnitt, in dem er entlang einer Winkelhalbierenden zwischen Deckelsicherungselement 151 und Anschlusssicherungselement 152 verläuft. Dadurch wird eine Bewegung eines dieser Sicherungselemente jeweils in eine Bewegung des anderen Sicherungselements übertragen, die eine zur ursprünglichen Bewegung im Wesentlichen orthogonale Richtung hat.

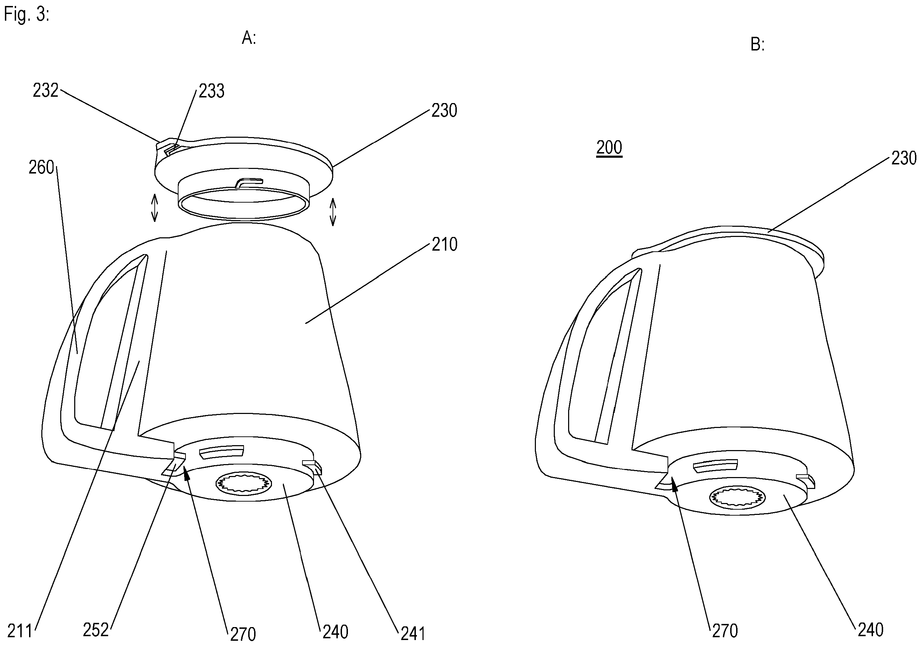

In Figur 3 ist ein weiteres Ausführungsbeispiel einer erfindungsgemäßen Küchengerätekomponente 200 in den Sicherungssituationen A und B dargestellt. Sie umfasst ein Gefäß 210 und einen Deckel 230, der einen Deckelausläufer 232 mit einem deckelseitigen Führungselement 233 aufweist. Das deckelseitige Führungselement 233 ist - entsprechend dem mit Bezug zur Figur 2 Beschriebenen - dazu eingerichtet, in ein (nicht gezeigtes) gefäßseitiges Führungselement einer Sicherungseinrichtung der Küchengerätekomponente 200 einzugreifen; in der Figur 3 ist von der Sicherungseinrichtung nur - in Sicherungssituation A - ein freies Ende eines Anschlusssicherungselements 252 zu sehen: Ein weiterer Abschnitt des Anschlusssicherungselements 252 und ein mit diesem verbundenes Deckelsicherungselement sind (abgesehen von einem nicht sichtbaren freien Ende des letzteren) im gezeigten Ausführungsbeispiel von einem Führungsgehäuse 211 eingefasst (das im gezeigten Ausführungsbeispiel nicht durchsichtig ist).

Die Küchengerätekomponente 200 umfasst weiterhin einen Komponentenfuß 240, der dazu eingerichtet ist, an einen (nicht gezeigten) Adaptersockel eines Küchengeräts angeschlossen zu werden. Im gezeigten Beispiel ist der Komponentenfuß dauerhaft am Gefäß 210 angeordnet; alternativ kann eine erfindungsgemäße Küchengerätekomponente auch ein Gefäß umfassen, dessen Komponentenfuß ablösbar, beispielsweise abzuschrauben ist.

Der gezeigte Komponentenfuß 240 ist als Teil eines Bajonettanschlusses ausgebildet und weist dazu eine Oberflächenausprägung mit Bajonettanschlusselementen 241 auf, die dazu eingerichtet sind, gegen jeweilige (Gegen)Elemente eines passenden Adaptersockels verdreht zu werden, um mit diesen zu verhaken. Bei einem derartigen Eindrehen in eine vorgesehene Position passiert mindestens eines der (Gegen)Elemente des Adaptersockels einen Anschlussbereich 260; in der Situation A, in der der Deckel abgelöst ist, wird dieser Anschlussbereich jedoch vom Anschlusssicherungselement 252 (nämlich von dessen freiem Ende) versperrt. Ein Anschließen der Küchengerätekomponente an den Adaptersockel ist damit in dieser Sicherungssituation A, in der ein Zugriff auf das Innere des Gefäßes möglich ist, ausgeschlossen. Insbesondere kann die Komponente in dieser Situation nicht bestimmungsgemäß betrieben werden, so dass ein Verwender sich auch bei einem Hineingreifen in das Gefäß nicht verletzen kann und so dass auch kein Lebensmittel aus dem offenen Gefäß geschleudert werden kann.

In der Sicherungssituation B hingegen befindet sich der Deckel 230 in einer vorgesehenen Schließstellung. Damit ist das Deckelsicherungselement der Sicherungseinrichtung in einer Zugriffssperrstellung, das Anschlusssicherungselement 252 hingegen in einer Anschlussfreigabestellung, in der es den Anschlussbereich 260 freigibt. Damit kann ein (Gegen)Element des Adaptersockels den Anschlussbereich 260 passieren, der Komponentenfuß 240 also an den Adaptersockel angeschlossen und die Küchengerätekomponente 200 bestimmungsgemäß betrieben werden.

Eine erfindungsgemäße Küchengerätekomponente 100,200 umfasst ein Gefäß 120,220, einen Deckel 130, 230, eine Sicherungseinrichtung 150 und einen Komponentenfuß 140, 240 zum lösbaren Anschließen der Küchengerätekomponente an einen Adaptersockel 11 eines Küchengeräts. Die Sicherungseinrichtung weist ein verstellbares Deckelsicherungselement 152 und ein verstellbares Anschlusssicherungselement 152, 252 auf. Deckelsicherungselement 151 und Anschlusssicherungselement 152 stehen dabei in einer Wirkverbindung miteinander, die eine Gleichzeitigkeit von einer Zugriffsfreigabestellung des Deckelsicherungselements 151 und einer Anschlussfreigabestellung des Anschlusssicherungselements 251, 252 ausschließt.

Ein erfindungsgemäßes Küchengerät 10 umfasst einen Elektromotor, eine erfindungsgemäße Küchengerätekomponente 100, 200 und einen Adaptersockel 12 zum Anschluss der Küchengerätekomponente.

### Bezugszeichen

- 10: Küchenmaschine
- 11: Adaptersockel
- 12: Element am Adaptersockel

- 100,200: Küchengerätekomponente
- 110,210: Gefäß
- 130,230: Deckel
- 131: Zuführschacht
- 132: Deckelausläufer
- 133, 233: deckelseitiges Führungselement
- 140,240: Komponentenfuß
- 241: Bajonettanschlusselement am Komponentenfuß
- 150: Sicherungseinrichtung
- 151: Deckelsicherungselement
- 152, 252: Anschlusssicherungselement
- 153: gefäßseitiges Führungselement
- 154: Federmechanismus
- 155: Kopplung
- 156: Führungsspalt
- 157: zapfenartige Erhebung
- 158: freies Ende des Anschlusssicherungselements
- 160, 260: Griff
- 270: Anschlussbereich

## Patentansprüche

1. Küchengerätekomponente (100, 200) für ein elektromotorisches Küchengerät, wobei die Küchengerätekomponente ein Gefäß (120, 220), einen Deckel (130, 230), eine Sicherungseinrichtung (150) und einen Komponentenfuß (140, 240) zum lösbaren Anschließen der Küchengerätekomponente an einen Adaptersockel des Küchengeräts umfasst, wobei die Sicherungseinrichtung ein verstellbares Deckelsicherungselement (152) und ein verstellbares Anschlusssicherungselement (152, 252) umfasst,
- wobei das Deckelsicherungselement (151) dazu eingerichtet ist, in einer Zugriffssperrstellung den Deckel in einer vorgesehenen Schließposition zu halten, in einer Zugriffsfreigabestellung den Deckel dagegen freizugeben und
- wobei das Anschlusssicherungselement (152, 252) dazu eingerichtet ist, in einer Anschlusssperrstellung einen Anschlussbereich (260) am Komponentenfuß (140, 240) zu versperren, in einer Anschlussfreigabestellung den Anschlussbereich dagegen freizugeben,
und wobei das Deckelsicherungselement (151) und das Anschlusssicherungselement (152) in einer Wirkverbindung miteinander stehen, die eine Gleichzeitigkeit von Zugriffsfreigabestellung des Deckelsicherungselements (151) und Anschlussfreigabestellung des Anschlusssicherungselements (152, 252) ausschließt,
und wobei der Komponentenfuß (140) mindestens ein Bajonettanschlusselement (241) umfasst, das dazu eingerichtet ist, gegen ein Element eines passenden küchengeräteseitigen Adaptersockels verdreht zu werden und mit diesem zu verhaken,
und wobei der Anschlussbereich (260) eine vorgesehene Position und/oder einen vorgesehenen Eintrittsbereich in die vorgesehene Position für das Element des Adaptersockels umfasst,
wobei das Deckelsicherungselement (151) in Zugriffssperrstellung vertikal weiter oben angeordnet ist als in der Zugriffsfreigabestellung, **dadurch gekennzeichnet dass** das Deckelsicherungselement (151) ein stabartig ausgebildetes, vertikal angeordnetes Deckelsicherungselement (151) ist und das Anschlusssicherungselement (152) ein stabartig ausgebildetes, horizontal angeordnetes Anschlusssicherungselement (152) ist, wobei beide Elemente (151, 152) in ein gemeinsames Führungsgehäuse (111) am Gefäß eingefasst sind, das ihre Bewegbarkeit jeweils auf eine Dimension beschränkt, nämlich auf eine vertikale Bewegung im Falle des Deckelsicherungselements (151) und auf eine horizontale Bewegung im Falle des Anschlusssicherungselements (152), wobei an einem freien Ende
des Deckelsicherungselements (151) eine Rinne mit einem Eingang (153a) und einem Haltebereich (153b) ausgebildet ist, um ein Anheben des Deckelsicherungselements (151) zu bewirken.

2. Küchengerätekomponente gemäß dem vorhergehenden Anspruch, wobei
das Deckelsicherungselement (151) und/oder das Anschlusssicherungselement (152, 252) in ein Führungsgehäuse (111, 211) am Gefäß (110, 210) eingefasst sind/ist, wobei das Führungsgehäuse eine Bewegbarkeit des Deckelsicherungselements bzw. des Anschlusssicherungselements auf jeweils eine Dimension beschränkt.

3. Küchengerätekomponente gemäß einem der vorhergehenden Ansprüche, wobei der Deckel ein deckelseitiges Führungselement (133, 233) aufweist, das dazu eingerichtet ist, bei einem Eindrehen des Deckels auf dem Gefäß (110, 210) in die vorgesehene Schließstellung mit einem gefäßseitigen Führungselement (153) am Deckelsicherungselement zusammenzuwirken und dieses so in die Zugriffsperrstellung zu überführen.

4. Küchengerätekomponente gemäß einem der vorhergehenden Ansprüche, wobei die Sicherungseinrichtung einen Federmechanismus (154) umfasst, dessen Federkraft der Zugriffssperrstellung des Deckelsicherungselements (151) entgegenwirkt.

5. Küchengerät (10) mit einem Elektromotor, einer Küchengerätekomponente (100, 200) gemäß einem der vorhergehenden Ansprüche und mit einem Adaptersockel (11), an den angeschlossen zu werden die Küchengerätekomponente eingerichtet ist.

6. Küchengerät gemäß Anspruch 5, wobei der Adaptersockel eine Oberflächenausprägung aufweist, die dazu eingerichtet ist, beim Anschließen und/oder im angeschlossenen Zustand des Komponentenfußes mit einer Oberflächenausbildung am Komponentenfuß zusammenzuwirken.

7. Küchengerät gemäß einem der Ansprüche 5 oder 6, wobei das Anschlusssicherungselement (152, 252) dazu eingerichtet ist, im angeschlossenen Zustand des Komponentenfußes an einer Oberfläche des Adaptersockels (12) anzustoßen.

8. Küchengerät gemäß einem der Ansprüche 5 bis 7, das eine Küchenmaschine, ein Entsafter, ein Standmixer oder ein multifunktionales Zerkleinerungsgerät ist.

## Claims

1. Kitchen appliance component (100, 200) for an electromotive kitchen appliance, wherein the kitchen appliance component comprises a vessel (120, 220), a cover (130, 230), a securing facility (150) and a component stand (140, 240) for detachably connecting the kitchen appliance component to an adapter base of the kitchen appliance, wherein the securing facility comprises an adjustable cover securing element (152) and an adjustable connection securing element (152, 252),
- wherein the cover securing element (151) is designed, in an access blocking position, to keep the cover in an intended closed position, by contrast in an access release position to release the cover and
- wherein the connection securing element (152, 252) is designed, in a connection blocking position, to block a connection region (260) on the component stand (140, 240), by contrast in a connection release position to release the connection region,
and wherein the cover securing element (151) and the connection securing element (152) are actively connected to one another, which rules out a concurrence of access release position of the cover securing element (151) and connection release position of the connection securing element (152, 252),
and wherein the component stand (140) comprises at least one bayonet connection element (241), which is designed to be rotated towards an element of a suitable kitchen appliance-side adapter base and to catch on the same,
and wherein the connection region (260) comprises an intended position and/or an intended entry region into the intended position for the element of the adapter base,
wherein in the access blocking position the cover securing element (151) is arranged vertically further up than in the access release position, **characterised in that** the cover securing element (151) is a rod-shaped cover securing element (151) which is arranged vertically and the connection securing element (152) is a rod-shaped connection securing element (152) which is arranged horizontally, wherein both elements (151, 152) are incorporated in a shared guide housing (111) on the vessel, which restricts their movability to one dimension in each case, namely to a vertical movement in the case of the cover securing element (151) and to a horizontal movement in the case of the connection securing element (152), wherein a channel with an input (153a) and a retaining region (153b) is embodied on a free end of the cover securing element (151) in order to cause the cover securing element (151) to lift.

2. Kitchen appliance component according to the preceding claim, wherein
the cover securing element (151) and/or the connection securing element (152, 252) is/are incorporated in a guide housing (111, 211) on the vessel (110, 210), wherein the guide housing restricts a movability of the cover securing element or the connection securing element to one dimension in each case.

3. Kitchen appliance component according to one of the preceding claims, wherein the cover has a cover-side guide element (133, 233), which is designed to interact with a vesselside guide element (153) on the cover securing element when the cover on the vessel (110, 210) is screwed into the intended closed position and to transfer this into the access blocking position.

4. Kitchen appliance component according to one of the preceding claims, wherein the securing facility comprises a spring mechanism (154), the spring force of which counteracts the access blocking position of the cover securing element (151).

5. Kitchen appliance (10) with an electric motor, a kitchen appliance component (100, 200) according to one of the preceding claims and with an adapter base (11), the kitchen appliance component being designed to be connected thereto.

6. Kitchen appliance according to claim 5, wherein the adapter base has a surface shaping which is designed to interact with a surface formation on the component stand upon connection and/or in the connected state of the component stand.

7. Kitchen appliance according to one of claims 5 or 6, wherein the connection securing element (152, 252) is designed to abut a surface of the adapter base (12) in the connected state of the component stand.

8. Kitchen appliance according to one of claims 5 to 7, which is a food processor, a juicer, an electric blender or a multifunctional shredding appliance.

## Revendications

1. Composant d'appareil de cuisine (100, 200) pour un appareil de cuisine à moteur électrique, dans lequel le composant d'appareil de cuisine comprend un récipient (120, 220), un couvercle (130, 230), un dispositif de sécurité (150) et un pied de composant (140, 240) pour le raccord amovible du composant d'appareil de cuisine sur un socle adaptateur de l'appareil de cuisine, dans lequel le dispositif de sécurité comprend un élément de sécurité de couvercle (152) réglable et un élément de sécurité de raccord (152, 252) réglable,
- l'élément de sécurité de couvercle (151) servant à maintenir le couvercle, dans une position de blocage d'accès, dans une position de fermeture prévue, à laisser en revanche le couvercle libre dans une position de libre accès et
- l'élément de sécurité de raccord (152, 252) servant à bloquer, dans une position de blocage de raccord, une zone de raccord (260) au pied de composant (140, 240), à laisser en revanche libre, dans une position libre de raccord, la zone de raccord
et dans lequel l'élément de sécurité de couvercle (151) et l'élément de sécurité de raccord (152) sont mutuellement dans une relation fonctionnelle qui exclut la simultanéité d'une position de libre accès de l'élément de sécurité de couvercle (151) et une position de libre raccord de l'élément de sécurité de connexion (152, 252),
et dans lequel le pied de composant (140) comprend au moins un élément de raccord à baïonnette (241) destiné à être tordu contre l'élément d'un socle adaptateur côté appareil de cuisine adapté et à s'y accrocher,
et dans lequel la zone de raccord (260) comprend une position prévue et/ou une zone prévue d'insertion dans la position prévue pour l'élément du socle adaptateur,
dans lequel l'élément de sécurité de couvercle (151) est disposé en position de blocage d'accès verticalement plus loin au-dessus qu'en position de libre accès,
**caractérisé en ce que** l'élément de sécurité de couvercle (151) est un élément de sécurité de couvercle (151) disposé à la verticale et réalisé en bâtonnet et l'élément de sécurité de raccord (152) est un élément de sécurité de raccord disposé à l'horizontale et réalisé en bâtonnet, les deux éléments (151, 152) étant cerclés dans un boîtier de guidage (111) commun au récipient qui limite leur capacité de mouvement à chaque fois à une dimension, à savoir à un mouvement vertical pour l'élément de sécurité de couvercle (151) et à un mouvement horizontal pour l'élément de sécurité de raccord (152), une rigole étant pratiquée sur une extrémité libre de l'élément de sécurité de couvercle (151) avec une entrée (153a) et une zone de maintien (153b) pour actionner l'élévation de l'élément de sécurité de couvercle (151).

2. Composant d'appareil de cuisine selon la revendication précédente, dans lequel l'élément de sécurité de couvercle (151) et/ou l'élément de sécurité de raccord (152, 252) est/sont cerclés dans un boîtier de guidage (111, 211) au récipient (110, 210), le boîtier de guidage limitant une capacité de mouvement de l'élément de sécurité de couvercle ou, selon le cas, de l'élément de sécurité de raccord, à chaque fois à une dimension.

3. Composant d'appareil de cuisine selon l'une des revendications précédentes, dans lequel le couvercle comprend un élément de guidage (133, 233) côté couvercle, lequel sert à coopérer, en cas de rotation du couvercle sur le récipient (110, 210) dans la position de fermeture prévue, avec un élément de guidage (153) côté récipient sur l'élément de sécurité de couvercle et de mettre ainsi celui-ci dans la position de blocage.

4. Composant d'appareil de cuisine selon l'une des revendications précédentes, dans lequel le dispositif de sécurité comprend un mécanisme à ressort (154), dont la force de rappel va à l'opposé de la position de blocage d'accès de l'élément de sécurité de couvercle (151).

5. Appareil de cuisine (10) comprenant un moteur électrique, un composant d'appareil de cuisine (100, 200) selon l'une des revendications précédentes, et un socle adaptateur (11) pour que le composant d'appareil de cuisine puisse y être raccordé.

6. Appareil de cuisine selon la revendication 5, dans lequel le socle adaptateur comprend un relief de surface servant à coopérer, lors du raccord et/ou à l'état raccordé du pied de composant, avec une réalisation de surface sur le pied de composant.

7. Appareil de cuisine selon l'une des revendications 5 ou 6, dans lequel l'élément de sécurité de raccord (152, 252) sert, à l'état raccordé du pied de composant, à s'abouter à une surface du socle adaptateur (12).

8. Appareil de cuisine selon l'une des revendications 5 à 7, lequel est un robot de cuisine, un presse-agrumes, un batteur-mélangeur ou un appareil de réduction multifonctionnel.
